(19) **Europäisches Patentamt European Patent Office Office européen des brevets**

(11) **EP 1 721 172 B1**

(12) **FASCICULE DE BREVET EUROPEEN**

(45) Date de publication et mention
de la délivrance du brevet:
**23.01.2008 Bulletin 2008/04**

(51) Int Cl.:
*G01P 13/02* (2006.01)        *G01P 5/165* (2006.01)
*B64D 43/02* (2006.01)        *F16L 27/08* (2006.01)

(21) Numéro de dépôt: **03811274.4**

(22) Date de dépôt: **04.12.2003**

(86) Numéro de dépôt international:
**PCT/EP2003/050941**

(87) Numéro de publication internationale:
**WO 2005/054874 (16.06.2005 Gazette 2005/24)**

(54) **JOINT TOURNANT POUR SONDE DE PRESSION MULTIFONCTION, A PALETTE MOBILE**

DREHGELENK FÜR EINE MULTIFUNKTIONELLE DRUCKSONDE MIT DREHFLÜGEL

ROTARY JOINT FOR MULTI-FUNCTION PRESSURE SENSOR, COMPRISING A MOVING VANE

(84) Etats contractants désignés:
**DE FR GB**

(43) Date de publication de la demande:
**15.11.2006 Bulletin 2006/46**

(73) Titulaire: **THALES**
**92200 Neuilly sur Seine (FR)**

(72) Inventeurs:
• **COLLOT, Lionel**
**94117 Arcueil Cédex (FR)**
• **HANSON, Nicolas**
**94117 Arcueil Cédex (FR)**
• **ROBERGE, Philippe**
**94117 Arcueil Cédex (FR)**

(74) Mandataire: **Beylot, Jacques et al**
**Marks & Clerk France**
**31-33 Avenue Aristide Briand**
**94117 Arcueil Cédex (FR)**

(56) Documents cités:
**WO-A-01/67115          CH-A- 264 654**
**US-A- 2 554 634        US-A- 2 936 617**
**US-A- 4 182 174**

EP 1 721 172 B1

**Description**

La présente invention concerne les sondes anémo-clinométriques permettant de mesurer les paramètres aérodynamiques de vol d'un aéronef et plus particulièrement celles dans lesquelles les orifices de mesure des pressions statique et totale sont situés sur une palette mobile de mesure d'angle d'incidence ou de dérapage destinée à s'orienter dans le lit du vent.

Les sondes de pression multifonction à palette mobile existent depuis longtemps. De telles sondes sont décrites, par exemple, dans la demande de brevet britannique GB 1,181,669 publiée en février 1970, dans la demande de brevet français FR 2.113746 publiée en 1972 ou encore, dans la demande de brevet français FR 2 399 027 publiée en 1979. Elles ont l'intérêt de concentrer en un même dispositif les prises de pressions statique et totale et le capteur d'angle d'incidence ou de dérapage, ce qui simplifie l'installation des capteurs de paramètres aérodynamiques de vol sur la cellule d'un aéronef.

Dans la très grande majorité des sondes de pression multifonction, les pressions, qui sont prises dans des orifices situés sur la palette mobile, sont transmises par voie pneumatique, au travers d'une articulation, à des capteurs de pressions fixes, placés à l'intérieur de la cellule de l'aéronef ou à l'intérieur de la sonde, dans un environnement moins éprouvant que l'intérieur de la palette mobile soumise à des écarts de température très importants dus à l'environnement extérieur et à un réchauffage en vue d'éviter les possibilités de givrage.

La transmission, par voie pneumatique des pressions, au travers de la palette mobile d'une sonde de pression multifonction et de l'articulation attachant la palette mobile au socle de la sonde est délicate car elle doit être fidèle et se faire avec un minimum de frottements secs au sein de l'articulation, les frottements secs étant à l'origine d'un phénomène d'hystérésis nuisant à la précision du positionnement de la palette dans le lit du vent, surtout lorsque l'aéronef présente une faible vitesse air. Pour la réaliser, il est habituel de relier les orifices de prise de pression sur la palette mobile aux capteurs de pression disposés dans le socle d'une sonde de pression multifonction, par des conduits plutôt rigides présentant deux parties aboutées en rotation relative l'une par rapport à l'autre, avec, à l'aboutement, un joint tournant à frottements. Les tubes souples sont évités dans la mesure du possible car ils sont réputés peu fiables dans l'environnement sévère d'une sonde de pression multifonction.

Ce préjugé à l'encontre des tubes souples est tel qu'ils ne sont utilisés dans une sonde de pression multifonction à palette mobile que lorsqu'il n'est pas possible de faire autrement de part la configuration de l'articulation attachant la palette au socle de la sonde. Une sonde de pression multifonction à palette mobile employant un morceau de tube souple sur une partie d'un conduit reliant un orifice situé sur la palette mobile à un capteur de pression placé derrière le socle de la sonde est décrite dans la demande de brevet français FR 2.399.027. Elle utilise un morceau de tube souple pour traverser un joint de cardan sans pour autant faire l'économie d'un joint tournant à frottements à l'aboutement de deux conduites rigides en rotation relative, placées derrière le joint de cardan. Ce morceau de tube souple est ici indispensable en raison des déformations locales imposées à la conduite par le joint de cardan. Cependant, des précautions sont prises pour qu'il ne subisse qu'un minimum de déformations, ce qui explique la présence du joint tournant à frottements. En effet, on peut remarquer que le joint de cardan est équipé intérieurement d'un train d'engrenages permettant de transformer le mouvement angulaire dans l'un des plans, en un mouvement rotatif équivalent d'un axe creux emprunté par le conduit et que le morceau de tube souple, qui fait passer la conduite pneumatique, de l'intérieur d'un goujon du joint de cardan à l'intérieur de l'axe creux en suivant les axes des engrenages, n'est soumis qu'à des déformations de flexion, aucun mouvement de rotation relatif n'existant entre l'axe creux et le goujon du joint de cardan.

Le document US-A-2 936 617 divulgue un joint tournant pour raccorder une sonde de pression à une palette mobile aux capteurs de pression qui sont fixes. Ledit joint tournant comportant une structure de fixation du dit joint à la cellule de l'aéronef étant équipé d'un palier permettant que le pied de la palette mobile peut tourner par rapport à la structure de fixation et possédant des conduits pneumatiques en forme de morceaux de tubes souples reliant les orifices de prise de pression de la palette mobile (10) aux capteurs de pression.

Le document CH 264 654 A divulgue un joint tournant pour raccorder une autre sonde de pression à palette mobile comportant un joint tournant possédant des conduits pneumatiques en forme de morceaux de tubes souples.

On trouve d'autres applications de tubes souples dans les sondes de pression pour aéronef mais celles-ci ne concernent pas des sondes de pression multifonction à palette mobile. L'une de ces applications, décrite dans le brevet américain US 5,130,707, est une connexion par tubes pneumatiques souples entre le pied d'une sonde de pression et l'ensemble des capteurs de pression de la sonde délocalisés à l'intérieur de la cellule d'un aéronef. Une autre application, décrite dans le brevet américain US 4,981,038, est une connexion par tubes pneumatiques souples placés dans le pied extensible d'une sonde de pression déployable. Dans ces utilisations, les tubes souples sont disposés dans un environnement beaucoup moins difficile que celui d'une articulation de sonde multifonction à palette mobile et soumis à des déformations moins fréquentes.

Les joints tournants à frottements rencontrés dans les sondes de pression multifonction à palette mobile au niveau des aboutements des parties en rotation relative de leurs conduits pneumatiques sont, quelle que soit leur configuration, à l'origine de l'essentiel des frottements secs rencontrés dans l'articulation. Ils obligent, lorsque l'on veut une bonne précision de la mesure d'angle d'incidence, à corriger la mesure mécanique d'angle par une mesure pneumatique de l'angle résiduel de la palette par rapport au lit du vent ou à assister l'articulation de manière pneumatique ou électrique toujours en opérant à partir d'une mesure pneumatique de l'angle résiduel de la palette par rapport au lit du vent. Cette mesure pneumatique de l'angle résiduel passe par une mesure de la pression différentielle entre l'intrados et l'extrados de la palette mobile qui implique la présence d'autres orifices de mesure de pression d'incidence sur la palette mobile et d'autres conduites pneumatiques entre la palette et le pied de la sonde et qui rend la sonde nettement plus complexe.

La présente invention a pour but d'améliorer la précision de l'orientation naturelle, dans le lit du vent, de la palette mobile d'une sonde de pression multifonction en réduisant la part des frottements secs de l'articulation attachant la palette au socle de la sonde due aux conduits pneumatiques et éventuellement électriques traversant l'articulation.

Elle a pour objet un joint tournant pour sonde de pression multifonction comportant un socle de fixation équipé d'un palier, une palette mobile libre en rotation sur un débattement limité et pourvue d'un pied tourillonnant dans le palier du socle de fixation, des orifices de prise de pression situés sur la palette mobile, des capteurs de pression disposés à l'extérieur de la palette mobile et des conduits pneumatiques reliant les orifices de prise de pression aux capteurs de pression en passant au travers du pied de la palette mobile et du palier du socle de fixation. Ce joint tournant est remarquable en ce qu'il comporte un plateau, en rotation relative par rapport au pied de la palette mobile, fixé sous le socle de fixation, dans l'axe et à distance du palier supportant la palette mobile, et des morceaux de tube souple qui relient le pied de la palette mobile au plateau et qui constituent les conduits pneumatiques sur une partie de leur trajet allant du pied de la palette mobile au plateau au-delà duquel sont disposés les capteurs de pression , ledit plateau présentant un léger débattement en profondeur, dans l'axe et à distance du palier supportant la palette mobile.

Avantageusement, le joint tournant comporte également des fils électriques qui relient le pied de la palette mobile au plateau et qui font partie de liaisons électriques allant de la palette mobile au corps de la sonde de pression multifonction.

Avantageusement, les morceaux de tubes souples et/ou fils électriques reliant le pied de la palette mobile au plateau, sont placés symétriquement par rapport à l'axe du palier.

Avantageusement, lorsque le joint comporte des fils électriques reliant le pied de la palette mobile au plateau, ceux-ci empruntent des trajets parallèles à ceux des morceaux de tube souple, symétriques par rapport à l'axe du palier et proches de cet axe.

Avantageusement, les morceaux de tube souple reliant le pied de la palette mobile au plateau sont en élastomère thermoplastique.

Avantageusement, les morceaux de tube souple reliant le pied de la palette mobile au plateau sont en élastomère thermoplastique du type copolymer styrène-éthylène-butylène-modifié avec huile de silicone.

Avantageusement, le plateau est en une matière élastique absorbant par ses déformations une partie des efforts d'élongation subis par les morceaux de tube souple et/ ou les fils électriques lors des mouvements relatifs de rotation entre le pied de la palette mobile et le plateau.

Avantageusement, le plateau est constitué d'un élastomère thermoplastique absorbant par ses déformations élastiques une partie des efforts d'élongation subis par les morceaux de tube souple et/ou les fils électriques lors des mouvements relatifs de rotation entre le pied de la palette mobile et le plateau

Avantageusement, le plateau est constitué d'un élastomère thermoplastique du type copolymer styrène-éthylène-butylène-modifié avec huile de silicone absorbant par ses déformations élastiques une partie des efforts d'élongation subis par les morceaux de tube souple et/ou les fils électriques lors des mouvements relatifs de rotation entre le pied de la palette mobile et le plateau.

Avantageusement, le plateau est attaché au socle de fixation par une fixation souple permettant un débattement limité du plateau par rapport au socle de fixation absorbant en partie les efforts d'élongation subis par les morceaux de tube soupleet/ou lors des mouvements relatifs de rotation entre le pied de la palette mobile et le plateau.

Avantageusement, les morceaux de tube souple et/ ou les fils électriques sont faiblement tendus entre le pied de la palette mobile et le plateau.

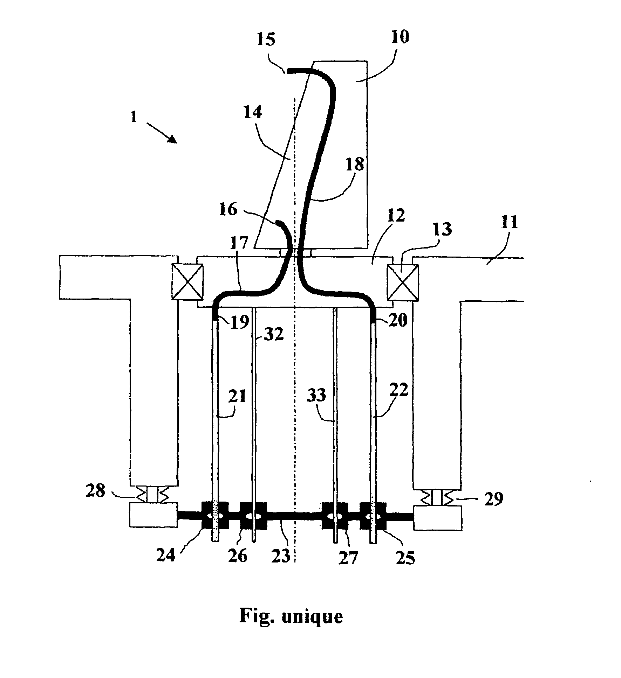

D'autres caractéristiques et avantages de l'invention ressortiront de la description ci-après d'un mode de réalisation donné à titre d'exemple. Cette description sera faite en regard du dessin dont la figure unique représente, de manière schématique, une sonde de pression à palette mobile selon l'invention, vue de profil et partiellement coupée.

La figure représente, sans en respecter les proportions, une sonde de pression multifonction 1 avec sa palette mobile 10 et son socle de fixation 11.

La palette mobile10, en forme d'ailette, est fixée par son pied 12 dans un palier 13 du socle de fixation 11, ce qui lui permet de tourner autour d'un axe longitudinal 14 et lui donne la possibilité de s'orienter dans le lit du vent à la manière d'une girouette.

Le socle de fixation 11 est destiné à être monté sur la peau d'un aéronef de manière que la palette mobile 10 de la sonde 1 fasse saillie à l'extérieur de l'aéronef et s'oriente selon l'écoulement local de l'air par rapport à la peau de l'aéronef. Ainsi, l'angle d'orientation pris de la palette mobile 10 est l'angle d'incidence locale ou à l'angle de dérapage suivant le montage sur l'aéronef. Des butées non représentées limitent le débattement de la palette mobile de part et d'autre d'une position neutre, par exemple, plus ou moins 60 degrés.

En plus de la mesure d'angle d'incidence locale, la sonde 1 permet des mesures des pressions dynamique et statique grâce à des prises d'air 15, 16 pratiquées au niveau de la palette mobile 10 et à des conduits pneumatiques qui raccordent ces prises d'air 15, 16 à des capteurs de pression non représentés placés à l'intérieur de l'aéronef.

Les conduits pneumatiques raccordant les prises d'air 15, 16 situées sur la palette mobile aux capteurs de pression placés à l'intérieur de l'aéronef passent par le pied 12 de la palette mobile 10. Ils doivent transmettre fidèlement aux capteurs de pression, les pressions régnant au niveau des prises d'air 15, 16 tout en s'accommodant des mouvements relatifs de rotation de la palette mobile 10 par rapport au socle de fixation 11 et en n'opposant à ces mouvements qu'un minimum de force de rappel.

Dans la première partie de leur trajet allant, au sein de la palette mobile 10, des prises d'air 15, 16 au pied 12 de cette dernière, les conduits pneumatiques sont réalisés à l'aide de tubulures métalliques rigides 17, 18 convenablement courbées, se terminant par des embouchures 19, 20 dépassant sous le pied de la palette mobile 12.

Dans la deuxième partie de leur trajet à l'extérieur de la palette mobile 12, les conduits pneumatiques sont réalisés à l'aide de morceaux de tube souple 21, 22 emmanchés sur les embouchures 19, 20 des tubulures métalliques 17, 18 dépassant du pied 12 de la palette mobile 10 et maintenus par ailleurs par un plateau 23 qu'ils traversent avant de poursuivre leurs chemins vers les capteurs de pression placés à l'intérieur de la cellule de l'aéronef.

Le fait d'utiliser des morceaux de tube souple 21, 22 au lieu de morceaux de tube rigide aboutés au moyen de joints tournants à frottements permet de diminuer les frottements secs lors de la rotation de la palette mobile 10 dans des proportions importantes puisqu'il n'est plus alors question de frottements secs mais d'une raideur élastique. Cette raideur élastique peut être réduite autant que l'on veut en jouant sur la nature des tubes souples, sur leur diamètre, sur leur disposition par rapport à l'axe de rotation du palier 13 et sur l'éloignement du plateau 23 par rapport au pied 12 de la palette mobile.

Sur la figure on peut encore apercevoir des fils électriques multibrins 32, 33 placés parallèlement aux morceaux de tube souple 21, 22 dans l'intervalle entre le pied 12 de la palette mobile 10 et le plateau 23. Ces fils électriques 32, 33 sont destinés à un système de réchauffage monté dans la palette mobile 10 de la sonde pour empêcher son givrage. D'autres fils électriques multibrins, toujours placés parallèlement aux morceaux de tubes souples 21, 22 peuvent être utilisés, notamment pour la mesure de la valeur d'une thermistance d'un système de mesure de la température totale de l'air monté dans la palette mobile. Ces fils électriques ont, contrairement aux tubes souples, une grande raideur longitudinale qui est transformée en raideur élastique par la souplesse du plateau 23 ou de sa fixation.

L'erreur de mesure angulaire provenant de l'écart entre la position vraie $\alpha_v$ et la position mesurée $\alpha$ de la palette induit par la raideur élastique due aux morceaux de tubes souples 21, 22 et aux fils électriques 32, 33 peut elle-même faire l'objet d'une compensation ultérieure car elle peut être calculée au moyen de la relation :

$$\alpha_v - \alpha = \frac{(\alpha - \alpha_0)R}{kV^2} \quad (1)$$

V étant la vitesse air, $kV^2$ le coefficient de rappel aérodynamique de la palette dans le lit du vent, $\alpha_0$ la position neutre de la palette et R le coefficient de raideur. En première approximation, on peut écrire :

$$P_t - P_s = \frac{1}{2}\rho V^2$$

$P_t$ étant la pression totale et $P_s$ étant la pression statique de sorte que la relation (1) devient :

$$\alpha_v - \alpha = \frac{(\alpha - \alpha_0)\rho R}{2k(P_t - P_s)} = K\frac{(\alpha - \alpha_0)}{(P_t - P_s)}$$

$\alpha_0$ peut être réglé au zéro d'incidence et K peut être mesuré en soufflerie. Les informations $P_t$, $P_s$ et $\alpha$ sont mesurées par la sonde. La correction $(\alpha_v - \alpha)$ peut donc être calculée et l'angle vrai $\alpha_v$ déduit de l'angle $\alpha$ mesuré par la sonde.

Dans ce cas, le système de mesure de la position angulaire de la palette mobile 10 comporte un capteur de position angulaire de la palette 10 complété par des moyens d'estimation d'erreur opérant à partir de la relation précédente et par des moyens de corrections de la mesure du capteur de position angulaire tenant compte de l'erreur estimée fournie par les moyens d'estimation d'erreur.

Au niveau du plateau 23, les morceaux de tube souple 21, 22 et les fils électriques 32, 33 sont fixés dans des traversées 24, 25, 26, 27 pouvant avoir des parois plus épaisses que le plateau 23 pour améliorer leur tenue.

Le plateau 23 est placé sous le socle de fixation 11 de la sonde, dans l'axe et à une certaine distance du palier 13. Il est attaché au socle de fixation 11 de la sonde de manière à limiter fortement et éventuellement empêcher tout mouvement de rotation selon l'axe du palier 13 afin que le mouvement de rotation relatif de la palette mobile 10 par rapport au socle de fixation 11 de la sonde se retrouve, pour sa plus grande part, entre le pied 12 de la palette mobile 10 et le plateau 23. De la sorte, les déformations provoquées sur les morceaux de tube souple 21, 22 par le mouvement relatif de la palette mobile 10 par rapport au socle de fixation 11 de la sonde sont localisées sur la distance séparant le pied 12 de la palette mobile 10 du plateau 23.

Dans l'intervalle séparant le pied 12 de la palette mobile 10, les fils électriques 32, 33 sont disposés symétriquement par rapport à l'axe 14 du palier 13, près de l'axe 14 afin de minimiser le couple de rappel dû à leur raideur. De même, les morceaux de tube souple 21, 22 sont disposés symétriquement par rapport à l'axe 14 du palier 13, de manière que l'un et l'autre subissent les mêmes amplitudes de déformation. Pour éviter toute usure par frottement de l'un contre l'autre lors des mouvements de rotation de la palette mobile ou de vibrations transmises par la structure de l'aéronef, les tubes souples 21, 22 et les fils électriques 32, 33 sont légèrement tendus dans l'espace séparant le pied 12 de la palette 10 du plateau 23, fixés à ce plateau 23 et au pied 12 de la palette mobile de manière à être parallèles à l'axe du palier 13 lorsque la palette mobile 10 est en position neutre et suffisamment écartés pour ne pas se toucher lorsque la palette mobile 10 parvient dans ses positions de butée.

Du fait qu'ils sont légèrement tendus, les morceaux de tube souple 21, 22 sont soumis à des efforts de traction ou d'élongation de la part de la palette mobile 10 lorsque celle-ci s'écarte de sa position neutre. Ils exercent alors, en réaction, un couple de rappel de la palette vers sa position neutre qui est nuisible car il introduit une erreur de positionnement de la palette dans le lit du vent augmentant d'autant plus que la vitesse air de l'aéronef faiblit et que la palette s'écarte de sa position neutre. Pour amener ce couple de rappel à une valeur très faible, il est possible de jouer sur divers facteurs :

- le diamètre, l'épaisseur, la nature des morceaux de tube souple 21, 22,
- la longueur des morceaux de tube souple 21, 22, c'est-à-dire l'espacement entre le pied 12 de la palette mobile, mais l'on est rapidement limité par l'espace disponible dans l'aéronef à l'arrière du pied de sonde,
- la capacité d'absorption par le plateau 23 ou sa fixation au socle 11 de la sonde des efforts de traction exercés par la palette mobile 10 sur les morceaux de tube souple 21, 22 lors de ses mouvements de rotation,
- l'écartement des morceaux de tube souple 21, 22 par rapport à l'axe 14 du palier,
- le débattement maximum.

Lorsque la palette mobile 10 s'écarte sa position neutre, le plateau 23 absorbe les efforts de traction exercés sur les fils électriques 32, 33 ainsi qu'une partie plus ou moins importante de ceux exercés sur les morceaux de tube souple 21, 22 soit, comme représenté, grâce à un système élastique 28, 29 d'attache au socle de fixation 11 lui autorisant un certain débattement en profondeur par rapport au socle, soit par déformation élastique grâce à une flexibilité naturelle, soit encore, par une combinaison d'une flexibilité naturelle et d'un système d'attache élastique.

Les morceaux de tube souple 21, 22 doivent résister aux conditions climatiques rigoureuses rencontrées au niveau de la peau de l'aéronef et ne pas présenter de phénomènes de vieillissement prématuré susceptibles de les fragiliser à la longue et de nuire à la fiabilité de la sonde. Ils sont avantageusement constitués d'un élastomère thermoplastique tel qu'un copolymer styrène-éthylène-butylène-modifié avec huile de silicone. Des tubes souples de cette composition sont déjà proposés dans le commerce pour un usage exclusivement médical, par exemple, par la société Consolidated Polymer Technologies qui les vend sous la dénomination "C-Flex® 50A".

Le plateau 23 peut être constitué d'une feuille souple en caoutchouc ou en élastomère, par exemple en élastomère thermoplastique tel qu'un copolymer styrène-éthylène-butylène-modifié comme les tubes souples, et être fixé au socle 11 de la sonde par un système d'attache rigide tel qu'un collier rigide fixé au socle par des vis.

**Revendications**

1. Joint tournant pour sonde de pression multifonction (1) comportant un socle de fixation (11) équipé d'un palier (13), une palette mobile (10) libre en rotation sur un débattement limité et pourvue d'un pied (12) tourillonnant dans le palier (13) du socle de fixation (11), des orifices de prise de pression (15, 16) situés sur la palette mobile (10), des capteurs de pression disposés à l'extérieur de la palette mobile (10) et des conduits pneumatiques (17, 21 ; 18, 22) reliant les orifices de prise de pression (15, 16) aux capteurs de pression en passant au travers du pied (12) de la palette mobile (10) et du palier (13) du socle de fixation (11), ledit joint tournant étant **caractérisé en ce qu'**il comporte un plateau (23), en rotation relative par rapport au pied (12) de la palette mobile (10), fixé au socle de fixation (11) par rapport auquel il présente un léger débattement en profondeur, dans l'axe et à distance du palier (13) supportant la palette mobile (10), et des morceaux de tube souple (21, 22) qui relient le pied (12) de la palette mobile (10) au plateau (23) et qui constituent les conduits pneumatiques (17, 21 ; 18, 22) sur une partie de leur trajet allant du pied (12) de la palette mobile (10) au plateau (23) au-delà duquel sont disposés les capteurs de pression.

2. Joint tournant selon la revendication 1, **caractérisé en ce qu'**il comporte en outre des fils électriques (32, 33) qui relient le pied (12) de la palette mobile (10) au plateau (23) et qui font partie de liaisons électriques allant de la palette mobile (10) au corps de la sonde de pression multifonction (1).

3. Joint tournant selon la revendication 1, **caractérisé en ce qu'**il comporte un système de mesure de la position angulaire de la palette mobile (10) avec des moyens de correction de l'erreur de mesure due à la raideur élastique estimée à partir de la relation :

$$\alpha_v - \alpha = \frac{(\alpha - \alpha_0)R}{kV^2}$$

V étant la vitesse air, $kV^2$ le coefficient de rappel aérodynamique de la palette dans le lit du vent, $\alpha_0$ la position neutre de la palette et R le coefficient de raideur.

4. Joint tournant selon la revendication 1, **caractérisé en ce qu'**il comporte un système de mesure de la position angulaire de la palette mobile (10) avec des moyens de correction de l'erreur de mesure due à la raideur élastique estimée à partir de la relation :

$$\alpha_v - \alpha = K\frac{(\alpha - \alpha_0)}{(P_t - P_s)}$$

K étant un coefficient mesuré en soufflerie, $P_t$ la pression totale, $P_s$ la pression statique et $a_0$ la position neutre de la palette.

5. Joint tournant selon la revendication 1, **caractérisé en ce que** les morceaux de tubes souples (21, 22) reliant le pied (12) de la palette mobile (10) au plateau (23), sont placés symétriquement par rapport à l'axe (14) du palier (13).

6. Joint tournant selon la revendication 2, **caractérisé en ce que** les fils électriques (32, 33) reliant le pied (12) de la palette mobile (10) au plateau (23), sont placés symétriquement par rapport à l'axe (14) du palier (13) et proches de cet axe (14).

7. Joint tournant selon la revendication 1, **caractérisé en ce que** les morceaux de tube souple (21, 22) reliant le pied (12) de la palette mobile (10) au plateau (23) sont en élastomère thermoplastique.

8. Joint tournant selon la revendication 1, **caractérisé en ce que** les morceaux de tube souple (21, 22) reliant le pied (12) de la palette mobile (10) au plateau (23) sont en élastomère thermoplastique du type copolymer styrène-éthylène-butylène-modifié avec huile de silicone.

9. Joint tournant selon la revendication 1, **caractérisé en ce que** le léger débattement du plateau (23) est obtenu par déformation dudit plateau (23), celui-ci étant en une matière élastique et absorbant par ses déformations une partie des efforts d'élongation subis par les morceaux de tube souple (21, 22) lors des mouvements relatifs de rotation entre le pied (12) de la palette mobile (10) et le plateau (23).

10. Joint tournant selon la revendication 2, **caractérisé en ce que** le léger débattement du plateau (23) est obtenu par déformation dudit plateau (23), celui-ci étant en une matière élastique absorbant par ses déformations les efforts d'élongation subis par les fils électriques (32, 33) ainsi qu'une partie des efforts d'élongation subis par les morceaux de tube souple (21, 22) lors des mouvements relatifs de rotation entre le pied (12) de la palette mobile (10) et le plateau (23).

11. Joint tournant selon la revendication 9 ou la revendication 10, **caractérisé en ce que** le plateau (23) est en caoutchouc.

12. Joint tournant selon la revendication 9 ou la revendication 10, **caractérisé en ce que** le plateau (23) est en élastomère.

13. Joint tournant selon la revendication 9 ou la revendication 10, **caractérisé en ce que** le plateau (23) est en élastomère thermoplastique.

14. Joint tournant selon la revendication 9 ou la revendication 10, **caractérisé en ce que** le plateau (23) est en élastomère thermoplastique du type copolymer styrène-éthylène-butylène-modifié avec huile de silicone.

15. Joint tournant selon la revendication 1, **caractérisé en ce que** le léger débattement du plateau (23) est obtenue par une fixation souple (28, 29) au socle de fixation (11) absorbant en partie les efforts d'élongation subis par les morceaux de tube souple (21, 22) lors des mouvements relatifs de rotation entre le pied (12) de la palette mobile (10) et le plateau (23).

16. Joint tournant selon la revendication 2, **caractérisé en ce que** le léger débattement du plateau (23) est obtenu par une fixation souple (28, 29) au socle de fixation (11) absorbant les efforts d'élongation subis par les fils électriques (32, 33) ainsi qu'une partie des efforts d'élongation subis par les morceaux de tube souple (21, 22) lors des mouvements relatifs de rotation entre le pied (12) de la palette mobile (10) et le plateau (23).

17. Joint tournant selon la revendication 1, **caractérisé en ce que** les morceaux de tube souple (21, 22) sont faiblement tendus entre le pied (12) de la palette (10) et le plateau (23).

**18.** Joint tournant selon la revendication 2, **caractérisé en ce que** les fils électriques (32, 33) sont faiblement tendus entre le pied (12) de la palette (10) et le plateau (23).

**19.** Joint tournant selon la revendication 2, **caractérisé en ce que** les fils électriques (32, 33) passent, à leur sortie du pied (12) de la palette mobile (10) au travers du plateau (23) en suivant entre le pied (12) de la palette mobile (10) et le plateau (23) des trajets parallèles à ceux des morceaux de tube souple (21, 22), symétriques par rapport à l'axe (14) du palier (13).

**Claims**

**1.** Rotary joint for a multifunction pressure probe (1), comprising a fastening base (11) equipped with a bearing (13), a moving vane (10) free to rotate over a limited deflection and provided with a root (12) swivelling in the bearing (13) of the fastening base (11), pressure tap orifices (15, 16) located on the moving vane (10), pressure sensors placed on the outside of the moving vane (10) and air lines (17, 21; 18, 22) that connect the pressure tap orifices (15, 16) to the pressure sensors passing through the root (12) of the moving vane (10) and the bearing (13) of the fastening base (11), said rotary joint being **characterized in that** it includes a plate (23), which can rotate relative to the root (12) of the moving vane (10) and is fastened to the fastening base (11) with respect to which it has a slight depth deflection, along the axis and at a distance from the bearing (13) that supports the moving vane (10), and lengths of flexible tubing (21, 22) that connect the root (12) of the moving vane (10) to the plate (23) and constitute the air lines (17, 21; 18, 22) over part of their path going from the root (12) of the moving vane (10) to the plate (23) beyond which the pressure sensors are placed.

**2.** Rotary joint according to Claim 1, **characterized in that** it further includes electrical wires (32, 33) that connect the root (12) of the moving vane (10) to the plate (23) and form part of electrical connections going from the moving vane (10) to the body of the multifunction pressure probe (1).

**3.** Rotary joint according to Claim 1, **characterized in that** it includes a system for measuring the angular position of the moving vane (10) with means for correcting the measurement error due to the elastic stiffness estimated from the equation:

$$\alpha_v - \alpha = \frac{(\alpha - \alpha_0)\, R}{kV^2}$$

V being the air speed, $kV^2$ the aerodynamic restoring force of the vane in the direction of the wind, $\alpha_0$ the neutral position of the vane and R the stiffness coefficient.

**4.** Rotary joint according to Claim 1, **characterized in that** it includes a system for measuring the angular position of the moving vane (10) with means for correcting the measurement error due to the elastic stiffness estimated from the equation:

$$\alpha_v - \alpha = K\, \frac{(\alpha - \alpha_0)}{(P_t - P_s)}$$

K being a coefficient measured in a wind tunnel, $P_t$ the total pressure, $P_s$ the static pressure and $\alpha_0$ the neutral position of the vane.

**5.** Rotary joint according to Claim 1, **characterized in that** the lengths of flexible tubing (21, 22) that connect the root (12) of the moving vane (10) to the plate (23) are placed symmetrically with respect to the axis (14) of the bearing (13).

**6.** Rotary joint according to Claim 2, **characterized in that** the electrical wires (32, 33) that connect the root (12) of the moving vane (10) to the plate (23) are placed symmetrically with respect to the axis (14) of the bearing (13) and close to this axis (14).

**7.** Rotary joint according to Claim 1, **characterized in that** the lengths of flexible tubing (21, 22) that connect the root (12) of the moving vane (10) to the plate (23) are made of a thermoplastic elastomer.

**8.** Rotary joint according to Claim 1, **characterized in that** the lengths of flexible tubing (21, 22) that connect the root (12) of the moving vane (10) to the plate (23) are made of a thermoplastic elastomer of the styrene/ethylene-butylene/styrene copolymer type modified with silicone oil.

**9.** Rotary joint according to Claim 1, **characterized in that** the slight deflection of the plate (23) is obtained by deformation of said plate (23), the latter being made of an elastic material that absorbs, by its deformation, some of the elongational forces undergone by the lengths of flexible tubing (21, 22) during the relative rotational movements between the root (12) of the moving vane (10) and the plate (23).

**10.** Rotary joint according to Claim 2, **characterized in that** the slight deflection of the plate (23) is obtained by deformation of said plate (23), the latter being made of an elastic material that absorbs, by its deformation, the elongational forces undergone by the electrical wires (32, 33) and also some of the elongational forces undergone by the lengths of flexible tubing (21, 22) during the relative rotational movements between the root (12) of the moving vane (10) and the plate (23).

**11.** Rotary joint according to Claim 9 or Claim 10, **characterized in that** the plate (23) is made of rubber.

**12.** Rotary joint according to Claim 9 or Claim 10, **characterized in that** the plate (23) is made of an elastomer.

**13.** Rotary joint according to Claim 9 or Claim 10, **characterized in that** the plate (23) is made of a thermoplastic elastomer.

**14.** Rotary joint according to Claim 9 or Claim 10, **characterized in that** the plate (23) is made of a thermoplastic elastomer of the styrene/ethylene-butylene/styrene copolymer type modified with silicone oil.

**15.** Rotary joint according to Claim 1, **characterized in that** the slight deflection of the plate (23) is obtained by a flexible fastening (28, 29) to the fastening base (11) that partly absorbs the elongational forces undergone by the lengths of flexible tubing (21, 22) during the relative rotational movements between the root (12) of the moving vane (10) and the plate (23).

**16.** Rotary joint according to Claim 2, **characterized in that** the slight deflection of the plate (23) is obtained by a flexible fastening (28, 29) to the fastening base (11) that absorbs the elongational forces undergone by the electrical wires (32, 33) and also some of the elongational forces undergone by the lengths of flexible tubing (21, 22) during the relative rotational movements between the root (12) of the moving vane (10) and the plate (23).

**17.** Rotary joint according to Claim 1, **characterized in that** the lengths of flexible tubing (21, 22) are slightly tensioned between the root (12) of the vane (10) and the plate (23).

**18.** Rotary joint according to Claim 2, **characterized in that** the electrical wires (32, 33) are slightly tensioned between the root (12) of the vane (10) and the plate (23).

**19.** Rotary joint according to Claim 2, **characterized in that** the electrical wires (32, 33) pass, on leaving the root (12) of the moving vane (10) through the plate (23), following, between the root (12) of the moving vane (10) and the plate (23), paths parallel to those of the lengths of flexible tubing (21, 22), these being symmetrical with respect to the axis (14) of the bearing (13).

**Patentansprüche**

**1.** Drehverbindung für eine multifunktionelle Drucksonde (1), die einen mit einem Lager (13) ausgestatteten Befestigungssockel (11), eine bewegliche Platte (10), die über einen begrenzten Ausschlag drehfrei und mit einem Fuß (12) versehen ist, der in dem Lager (13) des Befestigungssockels (11) dreht, Druckabgrifföffnungen (15, 16), die sich auf der beweglichen Platte (10) befinden, Druckfühler, die außerhalb der beweglichen Palette (10) angeordnet sind, und Pneumatikleitungen (17, 21; 18, 22) aufweist, die die Druckabgrifföffnungen (15, 16) mit den Druckfühlern verbinden, indem sie durch den Fuß (12) der beweglichen Platte (10) und das Lager (13) des Befestigungssockels (11) verlaufen, wobei die Drehverbindung **dadurch gekennzeichnet ist, dass** sie einen Teller (23) in relativer Drehung bezüglich des Fußes (12) der beweglichen Platte (10), der am Befestigungssockel (11) befestigt ist, bezüglich dessen er einen leichten Ausschlag in der Tiefe, in der Achse und in Abstand zum die bewegliche Platte (10) tragenden Lager (13) hat, und biegsame Rohrstücke (21, 22) aufweist, die den Fuß (12) der beweglichen Platte (10) mit dem Teller (23) verbinden und die die Pneumatikleitungen (17, 21; 18, 22) über einen Teil ihres Wegs bilden, der vom Fuß (12) der beweglichen Platte (10) bis zum Teller (23) geht, jenseits von dem die Druckfühler angeordnet sind.

**2.** Drehverbindung nach Anspruch 1, **dadurch gekennzeichnet, dass** sie außerdem elektrische Drähte (32, 33) aufweist, die den Fuß (12) der beweglichen Platte (10) mit dem Teller (23) verbinden und die Teil von elektrischen Verbindungen sind, die von der beweglichen Platte (10) bis zum Körper der multifunktionellen Drucksonde (1) gehen.

**3.** Drehverbindung nach Anspruch 1, **dadurch gekennzeichnet, dass** sie ein System zur Messung der Winkelposition der beweglichen Platte (10) mit Korrekturmitteln des Messfehlers aufgrund der elastischen Steifheit aufweist, die ausgehend von folgender Beziehung geschätzt wird:

$$\alpha_r - \alpha = \frac{(\alpha - \alpha_0)R}{kV^2}$$

wobei V die Luftgeschwindigkeit, kV$^2$ der aerodynamische Rückstellkoeffizient der Platte in die Windrichtung, $\alpha_0$ die Mittelstellung der Platte und R der Steifheitskoeffizient ist.

4. Drehverbindung nach Anspruch 1, **dadurch gekennzeichnet, dass** sie ein Messsystem der Winkelposition der beweglichen Platte (10) mit Korrekturmitteln des Messfehlers aufgrund der elastischen Steifheit aufweist, die ausgehend von folgender Beziehung geschätzt wird:

$$\alpha_r \;-\; \alpha \;=\; K\,\frac{(\alpha \;-\; \alpha_0)}{(P_t \;-\; P_s)}$$

wobei K ein im Windkanal gemessener Koeffizient, $P_t$ der Gesamtdruck, $P_s$ der statische Druck und $a_0$ die Mittelstellung der Platte ist.

5. Drehverbindung nach Anspruch 1, **dadurch gekennzeichnet, dass** die biegsamen Rohrstücke (21, 22), die den Fuß (12) der beweglichen Platte (10) mit dem Teller (23) verbinden, symmetrisch bezüglich der Achse (14) des Lagers (13) angeordnet sind.

6. Drehverbindung nach Anspruch 2, **dadurch gekennzeichnet, dass** die elektrischen Drähte (32, 33), die den Fuß (12) der beweglichen Platte (10) mit dem Teller (23) verbinden, symmetrisch bezüglich der Achse (14) des Lagers (13) und nahe dieser Achse (14) angeordnet sind.

7. Drehverbindung nach Anspruch 1, **dadurch gekennzeichnet, dass** die biegsamen Rohrstücke (21, 22), die den Fuß (12) der beweglichen Platte (10) mit dem Teller (23) verbinden, aus thermoplastischem Elastomermaterial sind.

8. Drehverbindung nach Anspruch 1, **dadurch gekennzeichnet, dass** die biegsamen Rohrstücke (21, 22), die den Fuß (12) der beweglichen Platte (10) mit dem Teller (23) verbinden, aus thermoplastischem Elastomermaterial vom Typ modifiziertes Styrol-Ethylen-Butylen-Copolymer mit Silikonöl sind.

9. Drehverbindung nach Anspruch 1, **dadurch gekennzeichnet, dass** der leichte Ausschlag des Tellers (23) durch Verformung des Tellers (23) erhalten wird, wobei dieser aus einem elastischen Material ist und durch seine Verformungen eine Teil der Dehnungskräfte absorbiert, denen die biegsamen Rohrstücke (21, 22) bei den relativen Drehbewegungen zwischen dem Fuß (12) der beweglichen Platte (10) und dem Teller (23) ausgesetzt sind.

10. Drehverbindung nach Anspruch 2, **dadurch gekennzeichnet, dass** der leichte Ausschlag des Tellers (23) durch Verformung des Tellers (23) erhalten wird, wobei dieser aus einem elastischen Material ist, das durch seine Verformungen die Dehnungskräfte, denen die elektrischen Drähte (32, 33) ausgesetzt sind, sowie einen Teil der Dehnungskräfte absorbiert, denen die biegsamen Rohrstücke (21, 22) bei relativen Drehbewegungen zwischen dem Fuß (12) der beweglichen Platte (10) und dem Teller (23) ausgesetzt sind.

11. Drehverbindung nach Anspruch 9 oder Anspruch 10, **dadurch gekennzeichnet, dass** der Teller (23) aus Kautschuk ist.

12. Drehverbindung nach Anspruch 9 oder Anspruch 10, **dadurch gekennzeichnet, dass** der Teller (23) aus Elastomermaterial ist.

13. Drehverbindung nach Anspruch 9 oder Anspruch 10, **dadurch gekennzeichnet, dass** der Teller (23) aus thermoplastischem Elastomermaterial ist.

14. Drehverbindung nach Anspruch 9 oder Anspruch 10, **dadurch gekennzeichnet, dass** der Teller (23) aus thermoplastischem Elastomermaterial vom Typ modifiziertes Styrol-Ethylen-Butylen-Copolymer mit Silikonöl ist.

15. Drehverbindung nach Anspruch 1, **dadurch gekennzeichnet, dass** der leichte Ausschlag des Tellers (23) durch eine biegsame Befestigung (28, 29) am Befestigungssockel (11) erhalten wird, die zum Teil die Dehnungskräfte absorbiert, denen die biegsamen Rohrstükke (21, 22) bei den relativen Drehbewegungen zwischen dem Fuß (12) der beweglichen Platte (10) und dem Teller (23) ausgesetzt sind.

16. Drehverbindung nach Anspruch 2, **dadurch gekennzeichnet, dass** der leichte Ausschlag des Tellers (23) durch eine biegsame Befestigung (28, 29) am Befestigungssockel (11) erhalten wird, die die Dehnungskräfte, denen die elektrischen Drähte (32, 33) ausgesetzt sind, sowie einen Teil der Dehnungskräfte absorbiert, denen die biegsamen Rohrstücke (21, 22) bei den relativen Drehbewegungen zwischen dem Fuß (12) der beweglichen Platte (10) und dem Teller (23) ausgesetzt sind.

17. Drehverbindung nach Anspruch 1, **dadurch gekennzeichnet, dass** die biegsamen Rohrstücke (21, 22) zwischen dem Fuß (12) der Platte (10) und dem Teller (23) leicht gespannt sind.

18. Drehverbindung nach Anspruch 2, **dadurch ge-**

**kennzeichnet, dass** die elektrischen Drähte (32, 33) zwischen dem Fuß (12) der Platte (10) und dem Teller (23) leicht gespannt sind.

19. Drehverbindung nach Anspruch 2, **dadurch gekennzeichnet, dass** die elektrischen Drähte (32, 33) bei ihrem Austritt aus dem Fuß (12) der beweglichen Platte (10) durch den Teller (23) hindurch gehen, indem sie zwischen dem Fuß (12) der beweglichen Platte (10) und dem Teller (23) parallelen Strecken zu denjenigen der biegsamen Rohrstücke (21, 22) symmetrisch zur Achse (14) des Lagers (13) folgen.

**Fig. unique**

**EP 1 721 172 B1**

## RÉFÉRENCES CITÉES DANS LA DESCRIPTION

**Documents brevets cités dans la description**

- GB 1181669 A
- FR 2113746
- FR 2399027
- US 2936617 A
- CH 264654 A
- US 5130707 A
- US 4981038 A